# EUROPEAN PATENT APPLICATION

(11) **EP 2 492 311 A1**
(43) Date of publication of application: **29.08.2012**
(21) Application number: 10795403.4
(22) Date of filing: 15.10.2010
(51) Int. Cl.: C08L 23/12, C08L 23/14, B32B 27/32

(54) **POLYPROPYLENE POLYMER COMPOSITION THAT CAN ABSORB OXYGEN**

(30) Priority: 16.10.2009 ES 200902002
(71) Applicant: Repsol YPF, S.A., 28046 Madrid (ES)
(72) Inventor: SANCHO ROYO, José, E-28931 Móstoles (ES); PEÑA GARCÍA, Begoña, E-28931 Móstoles (ES); MARTÍNEZ CEBRIÁN, Icíar, E-28931 Móstoles (ES); MENA MARTÍNEZ, Julia, E-28931 Móstoles (ES); RUIZ HERRERO, Sagrario, E-28931 Móstoles (ES); PARRILLA MARTÍN, Rosa, E-28931 Móstoles (ES); LÓPEZ REYES, Manuel, E-28931 Móstoles (ES)
(74) Representative: Pons Ariño, Angel
(86) International application number: PCT/ES2010/070665
(87) International publication number: WO 2011/045464

(57) **Abstract**

The invention relates to a polymer composition comprising a polypropylene, an adhesive polymer, and an oxygen-absorbing composition. The invention also relates to the use of said composition for the production of treated articles.

## Description

The present invention relates to a polymer composition comprising a polypropylene, an adhesive polymer and an oxygen-absorbing composition and its use for the manufacture of goods processed by any of the usual polymer-processing techniques comprising such composition.

### STATE OF THE ART

Polymeric materials currently represent a very substantial part in all of those used in the packaging industry due, among other reasons, to the flexibility in the design of shapes and sizes of containers and their lower weight compared to metal and glass.

Despite these advantages, polymeric materials have serious drawbacks when the containers made from such materials are to ensure the preservation of atmospheric oxygen-sensitive products, food among these, for long periods of time due to the generally high permeability to gases and more specifically to oxygen.

Commonly used thermoplastic polymers such as polyolefins have relatively high permeability to ()oxygen making them unsuitable for containers that require low oxygen permeability, however, they are the lowest-cost polymeric materials known and are therefore very useful if they could at least be used as the principal or structural material of such containers.

The packaging industry has developed technology and polymer materials to improve the barrier properties thereof, such as the development of polymers called barrier polymers, because they show a very low permeability to oxygen, such as ethylene-vinyl alcohol (EVOH), polyvinyldenechloride (PVDC), polyacrylic nitrile (PAN) or more recently, liquid crystal polymers (LCP).

A known technical solution that uses the ease of processing, the low cost and appropriate mechanical properties of polymeric materials such as polyolefins with the required barrier properties to make them suitable as containers with reduced oxygen permeability, is the use of multilayer materials including for example outer layers of low-cost polyolefin, particularly polypropylene, and internal layers of low-permeability polymer or barrier polymers as mentioned above.

These multi-layer materials contain at least one polymer layer that acts as a physical barrier for the transmission of oxygen not reacting therewith and reducing the permeability that the wall of the container would have if it were only composed of the structural base polymer usually used as outer layers, such as polypropylene.

But there are disadvantages that substantially affect the implementation of multi-layer barrier materials if non-polar base polymers such as polyolefins are used, since due to their incompatibility with polymers used as barriers, the layers of each one do not bond easily, resulting in a deterioration of the resulting multilayer material and of its effectiveness due to delamination between layers.

One solution to this problem is the use of an intermediate layer in addition to the two materials, base polymer and barrier polymer, known as adhesive layer serving as a bond between them. These multi-layer complexes with a minimum of 5 layers have only been manufactured by extrusion and the containers manufactured by subsequent thermoforming. Thus, extruded layers with a PP-adhesive-EVOH- adhesive-PP structure which can be later thermoformed to obtain containers have appeared on the market. However, it would be desirable to have structures that do not require intermediate adhesive layers for processing simplicity and economy.

Despite significantly reducing the oxygen permeability with the solution provided of multilayer material with a barrier layer, there are applications where it is necessary to further enhance the restriction of oxygen intake and ensure very low oxygen content inside packaging manufactured with this type of material over long periods of time. For this purpose a number of additives have been developed known as sequestering additives or compositions, oxygen absorbers or scavengers, equivalent expressions in the context of this description, which through a chemical reaction of oxidation of at least some of their components, are capable of irreversibly removing oxygen.

These additives or oxygen absorbing compositions generally consist of a mixture of different components and can be diluted or dispersed in a polymer matrix as a convenience to its incorporation into the materials constituting the wall of suitable containers to preserve the content of substances sensitive to oxygen for long periods of time.

The additives or oxygen absorbing compositions can be classified as organic when they are based preferably on polymeric components and inorganic when the components responsible for removing oxygen are inorganic compounds.

The Spanish patent application ES2214538 discloses inorganic-type oxygen scavenging compositions capable of being used by incorporating them as a mixture into the layers of a thermoplastic material, in particular a polyolefin such as polypropylene, or in the form of an individual layer as an active barrier in multilayer materials and are formed by metallic iron, an electrolytic component such as sodium chloride and an acidifying component. These compositions are activated by moisture

An essential component of oxygen absorbing compositions based on organic polymer components is generally a polymer capable of reacting irreversibly with oxygen under appropriate conditions usually in the presence of a catalytic system that activates the process. Such compositions have been developed more preferably for multilayer materials based on polyethylene terephthalate (PET).

Thus, Patents U.S. 5,021,515, U.S. 5,639,815 and also EP 520257 disclose combinations containing a passive and active barrier system simultaneously, consisting of three-layer material of the type PET, PET/ mixture PET-polyamide/PET, it having been found that when the polyamide contains a meta-xylene group, such as the known commercial product MXD-6 manufactured by Mitsubishi, and when a compound of a transition metal such as cobalt is added to the mixture, the passive barrier layer itself exercised by the polyamide, due to the relatively low permeability of the polyamides, also works in conjunction with this system as an active oxygen scavenging barrier

Among the materials containing oxygen absorbing polymers those disclosed in the patent application EP1066337 can be mentioned, wherein the polymeric material compositions consist of modified ethylene-methylacrylate copolymers containing cyclohexene groups in the lateral chain, while in the patent application EP1045801 consist of copolyamides containing oligomeric groups containing double bonds such as butadiene.

There are various possible types and combinations of polymeric materials containing unsaturated groups that act as oxygen absorbers and also mixtures of polymeric materials with the aforementioned polymers containing unsaturated groups as shown in WO 2006/096885 which describes polyesters containing unsaturated lateral groups or in EP2017308 wherein the oxygen absorbing resin consists of an unsaturated polymer, obtained from a cyclic olefin by the method of ring-opening metathesis, which optionally can be incorporated in the form of a mixture with a barrier polymer such as EVOH.

Other oxygen absorbing resin systems described are based on polymer compositions consisting of a mixture of a barrier polymer and a thermoplastic containing no polar groups, such as a styrene and isoprene block copolymer such as those disclosed in patent applications EP1033080 and EP1314761.

However, containers based on PET as structural material do not allow hot food packaging due to the distortion effect of heat and certainly cannot be subjected to autoclave temperature sterilization, as is the case of canned food or any treatment with high temperatures where such material is completely inappropriate for the reasons stated above. Moreover, in the latter case the high permeability of PET water vapour is particularly damaging, as it strongly affects the effectiveness of the EVOH in this type of multilayer materials.

It would be desirable to have composite materials or polymer compositions based on polypropylene, low-cost polymer material, low-water-vapour permeability and adequate thermal stability in sterilization processes, easily processed by standard polymer-processing techniques, but with an increased oxygen barrier capacity.

### DESCRIPTION OF THE INVENTION

The polymer composition of this invention, containing polypropylene as the base polymeric material, would overcome the shortcomings outlined above, associated with PET-based materials, especially when the latter is used in the manufacture of containers that have to be subjected to sterilization processes.

Additionally, the simultaneous presence in the polymer composition of the invention, on the one hand of components that modify polypropylene properties to show suitable adhesion to materials used as a barrier against oxygen, also known as barrier and, on the other hand of oxygen absorbing compositions to further increase oxygen barrier capacity resulting from such composition-based materials, enables the manufacture of the aforementioned complex multilayer materials as a solution to the problem of increasingly extending the lifetime of oxygen-sensitive substances through their use.

The present invention provides a polymer composition containing polypropylene and an oxygen absorbing composition (OAC), suitable to be coextruded or co-injected directly without intermediate adhesive layers with layers of oxygen barrier polymer such as EVOH, PVDC (polyvinylidene chloride) or polyamides.

Additionally, the polymer composition containing polypropylene and the absorbing composition of the invention, when processed as a layer adjacent to another containing a polymer with barrier properties without intermediate layers, acts as a structural material in addition to the oxygen-absorbing layer.

Thus, a first aspect of the present invention relates to a polymer composition (hereafter composition of the invention), comprising:
a) a polypropylene (PP)
b) an adhesive polymer (AP)
c) an oxygen absorbing composition (OAC)

The polypropylene (PP) of the invention can be a homopolymer or copolymer of propylene and ethylene, butene or other alpha olefins such as hexene or octene, although the preferred comonomer is ethylene in an amount that represents up to about 5% by weight, possibly containing additives such as clarifying agents well known in the state of the art. Additionally, a heterophasic copolymer or propylene block copolymer can also be used. Suitable heterophasic copolymers are those that contain a low rigidity phase consisting of a copolymer of propylene and ethylene or 1-butene dispersed in a propylene polymer matrix with a high rigidity. The high-rigidity polypropylene matrix contains from 0 to about 5% by weight of olefins that are not propylene, while the low-rigidity phase comprises propylene copolymer containing from 5% to 35% by weight of comonomer that is not propylene. The homopolymer polypropylene or propylene copolymers mentioned above and suitable according to the invention, can be obtained using catalysts known as Ziegler-Natta or by using catalyst systems based on metallocene compounds.

According to the present invention adhesive polymer (AP) means any polymer product or composition which, when blended with polypropylene, it facilitates the link between a layer made with the composition of the invention and adjacent layers preferably made with materials used as oxygen barrier material selected among those already known and widely used in other applications and which by their nature and dosage comply with European food contact materials legislation.

A non-limiting example of suitable adhesive polymers (AP) according to the invention could include:
- Polymers of Polyethylene or Polypropylene containing grafted polar groups or mixtures of both.
- Ethylene copolymers and acrylic or methacrylic acid
- Ethylene copolymers and acrylates or acetates
- Glycidyl methacrylate derivatives

In a preferred embodiment, the adhesive polymer of the composition of this invention is a grafted polypropylene with maleic anhydride.

In another preferred embodiment, the adhesive polymer of the composition of this invention is a grafted polypropylene with acrylic acid.

In a preferred embodiment, the adhesive polymer of the composition of this invention is a grafted styrene-ethylene-butylene-styrene copolymer with maleic anhydride.

Examples of commercially known polypropylenes containing grafted acrylic acid or maleic anhydride are Polybond® by Chemtura, Admer® by Mitsui Chemicals or Bynel 5000 by DuPont, among others.

The content in polar groups in the polymeric adhesive material is generally less than 15% by weight, finding as sufficient contents less than 7% by weight in the case of polymers containing acrylic acid and less than 5% by weight of maleic anhydride and more particularly in this latter case less than 3% by weight, these weight ratios referring to the total weight of the adhesive polymer (AP).

The polymer blend of polypropylene/adhesive polymer can contain between 1% and 25% by weight of adhesive polymer (AP).

In a preferred embodiment, the adhesive polymer of the composition of the invention is between 1 and 20% by weight of the total composition.

In a preferred embodiment, the oxygen absorbing composition (OAC) of the composition of this invention is organic. This composition comprises an oxidizable polymer (OP), pure or diluted in a polymer matrix. In a more preferred embodiment, said oxygen absorbing composition (OAC) contains at least one oxidizable polymer (OP), a catalyst and optionally a photoinitiator.

A non-limiting example of suitable oxidizable polymers (OP) according to the invention could include:
- Copolyesters or copolyamides containing oligomeric segments derived from butadiene that include free olefinic unsaturated bonds in the main copolymer chain.
- Copolyesters containing comonomers that include free olefin unsaturated bonds in the lateral branch of the coploymer.
   Ethylene copolyesters containing comonomers that include free olefin unsaturated bonds in the lateral branch of the copolymer
- Polymers derived from cyclic diolefins.

In another preferred embodiment, the oxidizable polymer (OP) includes a copolymer of a vinyl aromatic monomer and a diene. In a more preferred embodiment, the copolymer of a vinyl aromatic monomer and a diene is a random styrene-butadiene copolymer or block, diblock, triblock, multiblock, pure or gradual copolymer, and where the copolymer is linear, branched, radial or any combination thereof. Preferably, the ratio of the fraction of styrene is between 10% and 60% by weight of styrene-butadiene copolymer and the proportion units, 1,2-vinyl in the butadiene fraction of the styrene-butadiene copolymer is between 10% and 90% by weight.

In another preferred embodiment said oxidizable polymer (OP) includes an ethylene propylene copolymer and a diene, known as EPDM (Ethylene Propylene Diene Monomer).

In another preferred embodiment said oxidizable polymer (OP) includes an ethylene-cyclic olefin copolymer such as ethylene-norbornene copolymers.

Even more preferably the organic-type oxygen-absorbing composition (OAC) contains a catalyst wherein the catalyst is a transition metal derivative selected from a salt or oxide of cobalt, iron, nickel and manganese. More preferably the metal derivative is a salt or a cobalt or iron oxide.

Preferably, said salt or transition metal oxide is present in a ratio of between 1 and 6000 ppm referring to the transition metal content. More preferably said transition metal salt is present in a ratio of 5 to 2000 ppm in terms of transition metal content regarding the polymer composition of the invention

The oxidizable polymer (OP) component of the oxygen absorbing composition (OAC) may, in turn, be previously used pure or diluted in a polymer matrix before mixing with other components, wherein said polymer matrix can be selected from among the group comprising polypropylene (PP), polyethylene (LDPE, HDPE), polyethylene terephthalate (PET), ethylene vinyl acetate (EVA), Ethylene-Butyl Acrylate (EBA), acrylic acid ethylene or any combination thereof

In addition, the proportion of the oxygen absorbing composition (OAC) regarding the components (a) and (b) and its composition will be selected taking into account the following factors:
(1) The amount of oxygen and oxygen absorption rate desired to be exerted by the material comprising the aforementioned oxygen absorbing composition (OAC).
(2) The way to activate the system or how to accelerate the process of absorbing oxygen once the material has been manufactured.

As oxidizable polymers (OP) and suitable oxygen absorbers in the context of this invention, those that when used pure or diluted in a polymer matrix are compatible with the polypropylene / adhesive polymer mixture are preferably selected. By the effect of the catalyst, the reaction of oxidation of the oxidizable polymer (OP) in the oxygen absorbing composition (OAC) is facilitated and thus the elimination of oxygen. The preferred catalysts are cobalt salts derived from organic acids, such as stearic acid, octenyl succinic acid, ethylhexanol and oleic acid among others.

According to the present invention, the photoinitiator is used to activate or facilitate the reaction of oxygen with the oxidizable polymer (OP) and the catalyst of the oxygen absorbing composition (OAC), in particular to increase the initial rate reducing as appropriate the initiation or induction time when the composition of the invention is subjected to radiation. The induction time refers to the period required depending on the oxygen absorbing composition type to fully achieve its oxygen scavenging potential at the required speed.

Suitable examples of photoinitiators include, but are not limited to, the following: benzophenone, acenaphthene-quinone, diethoxy acetophenone o-methoxybenzophenone and 2-hydroxy-4-n-octyloxy benzophenone. These photoinitiators activate the oxygen reaction process in the absorbing polymer system/transition metal salt, when subjected to a visible or ultraviolet radiation, preferably at a wavelength of between about 200 nm and 700 nm and more preferably at a wavelength of between about 200 nm and 400 nm

If optionally a photoinitiator is used to accelerate the absorption of oxygen, the appropriate amount of photoinitiator present is greater than 0.01% by weight and preferably greater than 0.1% by weight and less than 6% by weight of the total weight of the composition of the invention

The capability of a polymer composition to absorb or remove oxygen can be measured in several ways. One method can be to analyze the decreasing oxygen content of samples taken over time in the free space left within a perfectly airtight container, in which a known amount of the previously processed composition has been added, optionally in the form of film or sheet. The measurement can be taken with equipment such as Optics Foxy Oxygen Sensor System marketed by Ocean Optics, or Oxysense 210T and GEN III 325I by Oxysense according to standard ASTM F 2714-08.

Oxygen absorbing polymer compositions (OAC) usually used in this invention are those that show an oxygen absorption rate greater than 0.01 cc/g. day, more preferably greater than 0.05 cc/g. day or more.

According to an embodiment of the invention when using an oxidizable polymer as part of the oxygen absorbing composition (OAC) of the invention whether pure or diluted in turn in a polymer matrix, the mixture with the other components of the polymeric composition of the invention: polypropylene (PP) and adhesive polymer (AP) and optionally a catalyst and photoinitiator, is performed through an extrusion process of all components supplied in solid form, so that the mixture takes place in the melt during the extrusion process.

According to another preferred embodiment, a mixture of the components of the composition of the invention is prepared either in a single step or in several stages by known techniques providing optimum dispersion of the same in molten state ensuring the greatest possible homogeneity

Such mixing techniques include the mixing in molten state using known equipment such as those equipped with twin screw extruders (co-rotating or not), yet not limited only to the latter possibility. Examples of commercially known equipment are continuous mixers such as CIM by Japan Steel Works, FCM by Farrell Corp. Among other possibilities, twin screw extrusion equipment can be mentioned such as ZSK by Coperion Werner Pfleiderer and TEX by Japan Steel. Moreover, it may be preferable to have equipment with a single screw extruder in series or following an intensive mixing or kneading equipment, performing a pelletizing extrusion operation. It is preferable to perform the kneading or mixing of the components at the lowest possible temperature to avoid degradation of polymer components and to protect the ingredients in the feed hopper with an inert atmosphere.

There are several alternative ways of preparing the composition of the invention from its components when the oxygen absorbing composition (OAC) is organic, characterized by mixing two or three components separately and then mixed together with other components.

According to another embodiment of the invention the composition of the invention is prepared by first making a premix of two components, (PP) and (AP), and then the resulting product is mixed with three components: an oxygen-absorbing composition (OAC) not containing a catalyst or photoinitiator, a catalyst and a photoinitiator.

According to another embodiment of the invention the composition of the invention is prepared by first making a premix of two components, (PP) and (AP), and then the resulting product is mixed with two components: an oxygen-absorbing composition (OAC) containing a catalyst and a photoinitiator.

According to another embodiment of the invention the composition of the invention is prepared by first making a premix of three components, (PP), (AP) and an oxygen absorbing composition (OAC) that does not contain a catalyst or photoinitiator, and then the product resulting from this premix of the components is mixed with a catalyst and a photoinitiator.

According to another embodiment of the invention the composition of the invention is prepared by first making a premix of three components, (PP), (AP) and an oxygen absorbing composition (OAC), which in turn contains a photoinitiator and then this premix of components is mixed with a catalyst.

In any of the cases the catalyst containing the transition metal and the photoinitiator may be added pure or in a previously prepared concentrate in a polymer matrix compatible with the other components.

In another preferred embodiment of the composition of the invention, the oxygen absorbing composition (OAC) is inorganic and contains at least iron.

According to another embodiment, said inorganic type oxygen absorbing composition (OAC) comprises at least one derivative of ascorbic acid or an alkaline sulphite or a mixture of both

Preferably, the ratio of ascorbic acid derivative is between 1% and 10% by weight and the proportion of alkaline sulphite is between 1% and 10% by weight with respect to the polymer composition.

When using an absorbing composition of the invention of an inorganic type, the mixture of the components can be done according to different embodiments and using different mixing modes without limitation similarly to those described for the case of organic absorbing compositions.

When using an inorganic type composition containing at least iron as an oxygen absorbing composition (OAC) of the invention, a preferred embodiment for mixing components of this oxygen absorbing composition (OAC) is to prepare a premix of the inorganic components containing at least iron from ingredients in solid form and to subsequently prepare a concentrate of the mixture in a polyolefin resin such as polyethylene or polypropylene or other polymer resins compatible with the polypropylene (PP) and adhesive polymer (AP) mixture by known mixing methods using simple extrusion or extrusion by means of equipment provided with a twin screw or other known in the trade which ensure a homogeneous mixture. The concentrate containing iron incorporated and dispersed in the aforementioned polymer resin should be stored in containers in the absence of oxygen.

According to a preferred embodiment of the invention, when the oxygen absorbing composition (OAC) is inorganic containing at least iron the composition of the invention is obtained by mixing the previously described concentrate or oxygen absorbing composition (OAC) with a premix of polypropylene (PP) and adhesive polymer (AP) carrying out the above mixture in the molten state during the extrusion process.

When using an oxygen absorbing composition (OAC) comprising at least one derivative of ascorbic acid or an alkaline sulphite or a mixture of both, the method for obtaining the composition of the invention is similar to the above in that oxygen absorbing composition (OAC) containing iron are used.

In a preferred embodiment, the composition of the present invention comprises at least one additive selected from the group comprising dyes, fillers, antistatic agents, nucleating agents, clarifying impact modifiers, deodorants, adsorbents, antioxidants and co-initiators.

In a more preferred embodiment, the additive is an antioxidant.

To prevent the polymer composition from rusting or degrading prematurely in the mixing process or during storage, the addition of antioxidants is recommended.

An antioxidant in this context is understood as a product that inhibits the oxidative degradation of polymers and processes such as crosslinking. It is common practice in the industry of polymer manufacturing and processing to add antioxidants to prevent degradation in the processing and increase the storage stability. Such additives usually extend the induction time of the oxidation reaction of the oxygen-absorbing composition (OAC) in the absence of the activation process (irradiation in the event that the OAC includes oxidizable polymers, humidity and temperature in the event that the OAC contains iron or other oxidizable inorganic materials.)

Examples of antioxidants include 2.6-di (t-butyl)-4-methylphenol (BHT), 2.6-di (t-butyl)-p-cresol; thiodiethylenebis [3-(3,5-di-t- butyl-4-hydroxyphenyl) propionate], triphenyl phosphite, 2.2 '-methylenebis (4,6-di-t-butylphenyl) octyl phosphite, tris-(nonylphenyl) phosphite, 2.2'-methylene-bis (6 - t-butyl-p-cresol), vitamin E, among others.

The proportion of antioxidant that can be advantageously added and be present in the composition of the invention is determined by the nature and proportion of the components of the composition, use, storage and weather conditions before use. Typically the antioxidant content is in the range from 0.01 % by weight to 0.5% by weight, being less than 1 % by weight.

The antioxidant can be incorporated in advance into any of the components present in the composition of the invention and in the mixing process of any of them with each other.

In another embodiment the additive is a deodorant or adsorbent.

Deodorant or adsorbent additives are optionally used to reduce the odour that may arise as a consequence of low molecular weight by-products generated in the oxygen absorption process when the composition of the invention is used as a constituent layer of multilayer material with oxygen absorption or scavenging capacity.

Preferably, the proportion of deodorant is less than 2% by weight of the total polymer composition.

Examples of useful deodorants in the context of the invention include zinc compounds (such as zinc oxides or sulphates), silica, aluminium compounds such as sulphate, zinc or aluminium silicate and mixtures thereof and silicates such as bentonites and zeolites.

In a more preferred embodiment, the additive is a co-initiator

It is understood that a co-initiator in this context is a product that interacts with a component of the oxygen-absorbing composition of the present invention to encourage the absorption of oxygen. Examples of co-initiators include N, N-dimethylaminoethyl methacrylate, N, N-dimethylaminoethyl acrylate, N, N-diethylaminoethyl methacrylate, 4 - (N, N-dimethylamino) phenethyl alcohol, tert-butylaminoethyl methacrylate, methyl diethanol amine, triethanolamine and N, N-dimethylaniline. The proportion of co-initiator that can be advantageously added and be present in the composition of the invention is determined by the nature and proportion of the components of the composition, use, storage and weather conditions before use. Typically the co-initiator content is in the range from 0.01 % by weight to 1 % by weight

When the composition of the invention contains additives, they are preferably incorporated into the polypropylene (PP). It is well known in practice, the addition of antioxidant, nucleating and clarifying additives to polypropylene in the extrusion and pelletizing process, and similarly, in particular cases the addition of fillers, dyes, or impact modifiers

According to another preferred embodiment part of the additives such as antioxidants, nucleating and clarifying agents are incorporated into the polypropylene (PP) and the rest of the above optionally used, such as deodorants, fillers and dyes, are incorporated into the process of obtaining the polypropylene (PP) and adhesive polymer (AP) mixture in one embodiment of the invention.

However, there is no particular limitation in the order and manner of incorporating the additives to the composition of the invention which can be added in any of the mixing operations described in the aforementioned different embodiments in the absence of additives.

The composition of the invention can be finally shaped in the form of processed items such as film, sheet, pipes and other miscellaneous objects such as containers, depending on its more convenient use and can be processed by extrusion moulding, extrusion, blow moulding or injection moulding.

The usefulness of the composition of the invention lies in the possibility of being processed by any of the usual polymer-processing techniques, such as adjacent layer to another layer of oxygen barrier polymer without intermediate adhesive layers, i.e. multilayer structures, contained in the composition of the invention and comprising at least two layers, while at least one of them is a barrier polymer and the other the composition of the invention, these structures being intended for the manufacture of items that require low permeability to oxygen, according to the performance required for their application or use.

Therefore, another aspect of the present invention relates to the use of the composition of the invention for the manufacture of film, sheet, pipes or containers.

Throughout the description and claims the word "comprise" and its variations are not intended to exclude other technical features, additives, components or steps. For those skilled in the art, other objects, advantages and features of the invention will emerge in part from the description and in part from practice of the invention. The following examples and drawings are provided by way of illustration and are not intended to limit the scope of the present invention

### EXAMPLES

The example below shows that the composition can be moulded as a layer adjacent to another barrier polymer such as EVOH without needing intermediate adhesive layers

### Example 1

A mixture of a homopolymer polypropylene IF 3.5 g/10 min (230°C, 2.16 kg) was prepared with an adhesive polymer PP-g-MA IF 115 g/10 min (190ºC, 2.16 kg) having a degree of functionalization with maleic anhydride of 1% by weight and an additional oxygen absorbing composition containing iron, keeping the supply of components in a nitrogen atmosphere by molten mixing at 210-230° C in a ZSK 25 twin screw extruder.

The polymer composition thus obtained was fed into a Collin CR 400 extruder where a 1 mm-thick sheet bilayer was extruded. For one of the sheet layers, the material used was Eval F ethylene-vinyl alcohol copolymer by EVAL / KURARAY (32% molar C2). The thickness of this layer was 0.2 mm. The thickness of another layer of polymer composition containing modified polypropylene was 0.8 mm.

When subjecting the sheets to a deformation and corrugation test it was observed that there was no delamination.

### Example 2

An identical composition to Example 1 was prepared and the resin obtained was transferred to a compression moulding unit and processed in the form of a sheet of 100 microns at a temperature of 220ºC. This sheet was cut to obtain a sample weighing 4.5 g which was introduced in a bottle with an internal volume of 500 ml. 5 ml of water was introduced to control the humidity and the bottle was sealed and equilibrated at a temperature of 23ºC. The initial oxygen concentration in the headspace of the container was measured with a Neo Fox analyzer by Ocean Optics and originally corresponds to an oxygen volume ratio: 21:79 nitrogen. The amount of oxygen absorbed by the composition at a relative humidity of 100% and 23º C was obtained from the decrease in oxygen concentration measured after 7 days being 9 cc of oxygen.

### Comparative Example 1

An identical composition to Example 1 was prepared except that no oxygen absorbing composition was added and the resin obtained was transferred to a compression moulding unit and processed in the form of sheets of 100 microns at a temperature of 220º C. This sheet was cut to obtain a sample weighing 4.5 g. The amount of oxygen absorbed by the composition at a relative humidity of 100% and 23ºC was obtained from the decrease in oxygen concentration measured after 7 days in the same manner as described in Example 2 proving to be not appreciable by the measuring equipment used.

The examples described below show that the amount of oxygen and the oxygen absorption rate depend on the proportion of oxygen absorbing composition (OAC) regarding to the components (a) and (b).

### Example 3

A mixture of a heterophasic polypropylene copolymer IF 28 g/10 min (230°C, 2.16 kg) with an adhesive polymer (PP-g-MA) that has a high degree of functionalization with maleic anhydride and additionally oxygen absorbing composition containing iron was prepared, maintaining the supply of the components in a nitrogen atmosphere by molten mixing at 220°C in a ZSK 25 twin screw extruder.

The polymer composition thus obtained was fed into an injection machine and processed in the form of 1mm-thick plates being 2.5x10cm in size at a temperature of 185ºC. Each of these plates has an average weight of 2.5g. Four plates were introduced in a bottle with an internal headspace volume of 550 ml. 40 ml of water was introduced to control the humidity and the bottle was sealed and equilibrated at a temperature of 23ºC. Moreover, the initial oxygen concentration was fixed and measured in the headspace of the container with an Oxysense 210 T analyzer at a value close to 2%. The amount of oxygen absorbed by the composition at a relative humidity of 100% and 23º C was obtained from the decrease in oxygen concentration measured after 14 days being 0.3 cc of oxygen. The analysis continued for 50 days, observing that the maximum absorption of the polymer composition was not reached and that the average oxygen absorption rate, which decreases with time, was 0.0022 cc /g.day.

### Example 4

A mixture of a heterophasic polypropylene copolymer IF 28 g/10 min (230°C, 2.16 kg) with an adhesive polymer (PP-g-MA) that has a high degree of functionalization with maleic anhydride and additionally an oxygen absorbing composition containing sodium ascorbate and sodium sulphite was prepared, maintaining the supply of the components in a nitrogen atmosphere by molten mixing at 180ºC in a ZSK 25 twin screw extruder.

The polymer composition thus obtained was fed into an injection machine and processed in the form of 1 mm-thick plates at a temperature of 185 º C, being 2.5x10cm in size. Each of these plates has an average weight of 2.5g. Four plates were introduced into a bottle with an internal headspace volume of 550 ml. 40 ml of water was introduced to control the humidity and the bottle was sealed and equilibrated at a temperature of 23ºC. Moreover, the initial oxygen concentration in the headspace of the container was fixed and measured with an Oxysense 210 T analyzer at a value close to 2%. The amount of oxygen absorbed by the composition at a relative humidity of 100% and 23ºC was obtained from the decrease in oxygen concentration measured after 14 days being 0.8 cc of oxygen. The analysis continued for 50 days, observing that the maximum absorption of the polymer composition was not reached and the average oxygen absorption rate, which decreases with time, was 0.005 cc /g.day.

### Example 5

A mixture of a heterophasic polypropylene copolymer IF 28 g/10 min (230°C, 2.16 kg) with an adhesive polymer (PP-g-MA) that has a high degree of functionalization with maleic anhydride and additionally an oxygen absorbing composition containing sodium ascorbate and sodium sulphite was prepared, maintaining the supply of the components in a nitrogen atmosphere by molten mixing at 180ºC in a ZSK 25 twin screw extruder.

The polymer composition thus obtained was fed into an injection machine and processed in the form of 1mm-thick plates of 2.5x10cm in size at a temperature of 185ºC. Each of these plates has an average weight of 2.5g. Four plates were introduced into a bottle with an internal headspace volume of 550 ml. 40 ml of water was introduced to control the humidity and the bottle was sealed and equilibrated at a temperature of 23ºC. Moreover, the initial oxygen concentration in the headspace of the container was fixed and measured with an Oxysense 210 T analyzer at a value close to 2%. The amount of oxygen absorbed by the composition at a relative humidity of 100% and 23ºC was obtained from the decrease in oxygen concentration measured after 7 days being 1.5 cc of oxygen. The analysis continued for 50 days, observing that the maximum absorption of the polymer composition was not reached and the average oxygen absorption rate, which decreases with time, was 0.015 cc /g.day.

The examples described below show that the amount of oxygen and the oxygen absorption rate depend on the way the oxygen absorbing composition (OAC) is activated.

### Example 6

A mixture of a heterophasic polypropylene copolymer IF 28 g/10 min (230 ° C, 2.16 kg) with an adhesive polymer (PP-g-MA) that has a high degree of functionalization with maleic anhydride and additionally an oxygen absorbing composition containing sodium ascorbate and sodium sulphite was prepared, maintaining the supply of the components in a nitrogen atmosphere by molten mixing at 180ºC in a ZSK 25 twin screw extruder.

The polymer composition thus obtained was fed into an injection machine and processed in the form of 1mm-thick plates of 2.5x10cm in size at a temperature of 185ºC. Each of these plates has an average weight of 2.5g. Three plates were introduced into a bottle with an internal headspace volume of 240 ml. 20 ml of water was introduced to control the humidity and the bottle was sealed and equilibrated at a temperature of 23ºC. Moreover, the initial oxygen concentration in the headspace of the container was fixed and measured with an Oxysense 325I analyzer at a value close to 2%. The amount of oxygen absorbed by the composition at a relative humidity of 100% and 23ºC was obtained from the decrease in oxygen concentration measured after 30 days being 2.45 cc of oxygen. The analysis continued for 50 days, observing that the maximum absorption of the polymer composition was not reached and the average oxygen absorption rate, which decreases with time, was 0.015 cc /g.day.

### Example 7

A mixture of a heterophasic polypropylene copolymer IF 28 g/10 min (230°C, 2.16 kg) with an adhesive polymer (PP-g-MA) that has a high degree of functionalization with maleic anhydride and additionally an oxygen absorbing composition containing a styrene-butadiene-styrene with a ratio of 1,2-vinyl units in the butadiene fraction of 80%, cobalt stearate, benzophenone, N methacrylate, N-dimethylaminoethyl and Irganox B 215 was prepared, maintaining the supply of components in a nitrogen atmosphere by molten mixing at 175°C in a Eurolab twin screw extruder.

The polymer composition thus obtained is fed into a dual-platter Schwebenthan press where 1 mm-thick plates were compression moulded being 2.5x6cm in size and each with an average weight of 1.4g. Three plates were introduced into a bottle with an internal headspace volume of 240 ml. 20 ml of water was introduced to control the humidity and the bottle was sealed and equilibrated at a temperature of 23ºC. Moreover, the initial oxygen concentration in the headspace of the container was fixed and measured with an Oxysense 325I analyzer at a value close to 2%. The amount of oxygen absorbed by the composition at a relative humidity of 100% and 23ºC was obtained from the decrease in oxygen concentration measured after 30 days in the same manner as described in Example 6 proving to be not appreciable by the measuring equipment used.

### Example 8

Three samples of composition identical to those obtained in Example 7 were subjected to radiation with a 340 nm wavelength and 110 W/m2 intensity for 2 minutes. Once completed this process, they were introduced into a bottle with an internal headspace volume of 240 ml. 20 ml of water was introduced to control the humidity and the bottle was sealed and equilibrated at a temperature of 23ºC. Moreover, the initial oxygen concentration in the headspace of the container was fixed and measured with an Oxysense 325I analyzer at a value close to 2%. The amount of oxygen absorbed by the composition at a relative humidity of 100% and 23ºC was obtained from the decrease in oxygen concentration measured after 26 days being 5.19 cc of oxygen. The analysis continued for 39 days, observing that the maximum absorption of the polymer composition was not reached and the average oxygen absorption rate, which decreases with time, was 0.051 cc / g.day.

The examples described below show that the amount of oxygen and oxygen absorption rate depends on the proportion of the oxygen absorbing composition regarding to the components (a) and (b) and its nature

### Example 9

A mixture of a heterophasic polypropylene copolymer IF 28 g/10 min (230°C, 2.16 kg) with an adhesive polymer (PP-g-MA) that has a high degree of functionalization with maleic anhydride and additionally an oxygen absorbing composition containing a styrene-butadiene-styrene copolymer with a ratio of 1,2-vinyl units in the butadiene fraction of 10%, cobalt stearate, benzophenone, N methacrylate, N-dimethylaminoethyl and Irganox B 215 was prepared, maintaining the supply of components in a nitrogen atmosphere by molten mixing at 175°C in a ZSK 25 twin screw extruder.

The polymer composition thus obtained was fed into an injection machine and processed in the form of 1mm-thick plates, 2.5x10cm in size, at a temperature of 185ºC. Each of these plates has an average weight of 2.3g. Three samples were subjected to radiation with a 340 nm wavelength and 100 W/m2 intensity for 2 minutes. Once completed this process, they were introduced into a bottle with an internal headspace volume of 240 ml. 20 ml of water was introduced to control the humidity and the bottle was sealed and equilibrated at a temperature of 23ºC. Moreover, the initial oxygen concentration in the headspace of the container was fixed and measured with an Oxysense 325I analyzer at a value close to 2%. The amount of oxygen absorbed by the composition at a relative humidity of 100% and 23ºC was obtained from the decrease in oxygen concentration measured after 30 days proving to be not noticeable by the measuring equipment used.

### Example 10

A mixture of a heterophasic polypropylene copolymer IF 28 g/10 min (230°C, 2.16 kg) with an adhesive polymer (PP-g-MA) that has a high degree of functionalization and additionally an oxygen absorbing composition containing a styrene-butadiene-styrene copolymer with a ratio of 1,2-vinyl units in the butadiene fraction of 80%, cobalt stearate, benzophenone, N methacrylate, N-dimethylaminoethyl and Irganox B 215 was prepared, maintaining the supply of components in a nitrogen atmosphere by molten mixing at 175 °C in a Eurolab twin screw extruder.

The polymer composition thus obtained was fed into a dual-platter Schwebenthan press where 1mm-thick plates were compression moulded, being 2.5x6cm in size and each with an average weight of 1.4g. Three samples were subjected to radiation with a 340 nm wavelength and 100W/m2 intensity for 2 minutes. Once completed this process they were introduced into a bottle with an internal headspace volume of 240 ml. 20 ml of water was introduced to control the humidity and the bottle was sealed and equilibrated at a temperature of 23ºC. Moreover, the initial oxygen concentration in the headspace of the container was fixed and measured with an Oxysense 325I analyzer at a value close to 2%. The amount of oxygen absorbed by the composition at a relative humidity of 100% and 23ºC was obtained from the decrease in oxygen concentration measured after 11 days being 3.45 cc of oxygen. The analysis continued for 39 days, observing that the maximum absorption of the polymer composition was not reached and the average oxygen absorption rate, which decreases with time, was 0.051 cc / g.day

The examples described below show that the maximum absorption of oxygen depends on the proportion of the oxygen absorbing composition regarding to the components (a) and (b) and its nature. In particular, it is shown that with the polymer composition of this invention very low and even negligible concentrations of oxygen are maintained stable over time.

### Example 11

A mixture of a heterophasic polypropylene copolymer IF 28 g/10 min (230°C, 2.16 kg) with an adhesive polymer (PP-g-MA) that has a high degree of functionalization with maleic anhydride and additionally an oxygen absorbing composition containing a styrene-butadiene-styrene copolymer with a ratio of 1,2-vinyl units in the butadiene fraction of 80%, cobalt stearate, benzophenone, N methacrylate, N-dimethylaminoethyl and Irganox B 215 was prepared, maintaining the supply of components in a nitrogen atmosphere by molten mixing at 175°C in a Eurolab twin screw extruder.

The polymer composition thus obtained is fed into a dual-platter Schwebenthan press where 1 mm-thick plates were compression moulded being 2.5x6cm in size and each with an average weight of 1.4g. Three samples were subjected to radiation with a 340 nm wavelength and 100W/m2 intensity for 2 minutes. Once completed this process, they were introduced into a bottle with an internal headspace volume of 240 ml. 20 ml of water was introduced to control the humidity and the bottle was sealed and equilibrated at a temperature of 23ºC. Moreover, the initial oxygen concentration in the headspace of the container was fixed and measured with an Oxysense 325I analyzer at a value close to 2.42%. The amount of oxygen absorbed by the composition at a relative humidity of 100% and 23ºC was obtained from the decrease in oxygen concentration measured after 46 days being 5.43 cc of oxygen. During this time it is observed that maximum absorption of the polymer composition is reached. The analysis continued for 81 days, observing that the oxygen absorbed by the polymer composition is of a similar value to that obtained at 46 days, that the average oxygen absorption rate, which decreases with time, was 0.040 cc /g.day and that the level of oxygen in the container is stable at 0.16%

### Example 12

Three samples of composition identical to those obtained in Example 11 and subjected to the same activation process, were introduced into a bottle with an internal headspace volume of 240 ml. 20 ml of water was introduced to control the humidity and the bottle was sealed and equilibrated at a temperature of 23ºC. Moreover, the initial oxygen concentration in the headspace of the container was fixed and measured with an Oxysense 325I analyzer at a value of 2.47%. The amount of oxygen absorbed by the composition at a relative humidity of 100% and 23ºC was obtained from the decrease in oxygen concentration measured after 46 days being 5.84 cc of oxygen. During this time it is observed that maximum absorption of the polymer composition is reached. The analysis continued for 81 days, observing that the oxygen absorbed by the polymer composition is of a similar value to that obtained at 46 days, that the average oxygen absorption rate, which decreases with time, was 0.040 cc /g.day and that the level of oxygen in the container is stable at 0.04%

### Example 13

Three samples of composition identical to those obtained in Example 11 and subjected to the same activation process, are introduced into a bottle with an internal headspace volume of 240 ml. 20 ml of water was introduced to control the humidity and the bottle was sealed and equilibrated at a temperature of 23ºC. Moreover, the initial oxygen concentration in the headspace of the container was fixed and measured with an Oxysense 325I analyzer at a value of 2.34%. The amount of oxygen absorbed by the composition at a relative humidity of 100% and 23ºC was obtained from the decrease in oxygen concentration measured after 46 days being 5.84 cc of oxygen. During this time it is observed that maximum absorption of the polymer composition is reached. The analysis continued for 81 days, observing that the oxygen absorbed by the polymer composition is of a similar value to that obtained at 46 days, that the average oxygen absorption rate, which decreases with time, was 0.040 cc /g.day and that the final oxygen level is not noticeable by the measuring equipment used (0.00%)

It is possible to implement other embodiments that can be easily deduced from the preceding examples by one skilled in the state of the art. Such embodiments are within the object of the invention whose scope is defined as expressed in the following claims:

## Claims

1. A polymer composition comprising:
a. a polypropylene,
b. an adhesive polymer,
c. an oxygen absorbing composition.

2. A composition according to claim 1, wherein the oxygen absorbing composition is organic or inorganic.

3. A composition according to claim 2, wherein the oxygen absorbing composition includes an oxidizable organic polymer, pure or diluted in a polymer matrix, which is selected from the group comprising: copolyesters or copolyamides containing oligomeric segments derived from butadiene incorporating free olefinic unsaturated bonds in the main chain of the copolymer; copolyesters containing comonomers incorporating free olefinic unsaturated bonds in the lateral branch of the copolymer; ethylene copolymers containing comonomers incorporating free olefin unsaturated bonds in the lateral branch of the copolymer; polymers derived from cyclic diolefins; copolymers of an vinyl aromatic monomer and a diene; ethylene-cyclic olefin copolymers or EPDM copolymers

4. A composition according to claim 3, wherein the copolymer of a vinyl aromatic monomer and a diene is a random styrene-butadiene copolymer, or a block, diblock, triblock, multiblock, pure or gradual copolymer, and where the copolymer is linear, branched, radial or any combination thereof.

5. A composition according to claim 4, wherein the styrene content is between 10% and 60% by weight of the styrene-butadiene copolymer and the proportion of 1,2-vinyl units in the butadiene fraction of the styrene-butadiene copolymer is comprised between 10% and 90% by weight.

6. A composition according to any of claims 3 to 5, wherein the oxygen absorbing composition also includes a transition metal derivative as a catalyst.

7. A composition according to claim 6, wherein the transition metal is selected from a salt or oxide of cobalt, iron, nickel and manganese.

8. A composition according to claim 6 or 7, wherein the transition metal is a cobalt salt derived from an organic acid which is selected from stearic acid, octenyl succinic acid, ethylhexanoic and oleic acid.

9. A composition according to any of claims 6 to 8, wherein the proportion of salt or transition metal oxide is between 1 and 6000 ppm referred to the content of such transition metal.

10. A composition according to any of claims 6 to 8, wherein the proportion of salt or transition metal oxide is between 5 and 2000 ppm referred to the content of such transition metal.

11. A composition according to any of claims 3 to 10, wherein the polymer matrix is selected from the list comprising polypropylene, polyethylene, polyethylene terephthalate, ethylene vinyl acetate, ethylene-butyl acrylate, ethylene acrylic acid or any combination thereof.

12. A composition according to any of claims 3 to 11, further comprising a photoinitiator.

13. A composition according to claim 12, wherein the photoinitiator is selected from the list comprising benzophenone, acenaphthene-quinone, diethoxy acetophenone, o-methoxybenzophenone and 2-hydroxy-4-n-octyloxy benzophenone.

14. A composition according to claim 12 or 13, wherein the proportion of photoinitiator is greater than 0.01% by weight with respect to the polymer composition

15. A composition according to claim 14, wherein the proportion of photoinitiator is between 0.1% and 6% by weight with respect to the polymer composition.

16. A composition according to any of claims 3 to 15, wherein activation is performed with radiation at a wavelength between 200 nm and 700 nm.

17. A composition according to claim 2, wherein the oxygen absorbing composition is inorganic and contains at least iron.

18. A composition according to claim 2, wherein the oxygen absorbing composition comprises at least one ascorbic acid derivative, an alkaline sulphite or a mixture of both.

19. A composition according to claim 18, wherein the ratio of ascorbic acid derivative is between 1% and 10% by weight and the proportion of alkaline sulphite is between 1% and 10% by weight with respect to the polymer composition.

20. A composition according to any of claims 1 to 19, wherein the adhesive polymer is selected from the group comprising:
- polyethylene or polypropylene polymer containing grafted polar groups or mixtures of both,
- copolymers of ethylene and acrylic acid or methacrylic acid,
- copolymers of ethylene and acrylates or acetates and
- glycidyl methacrylate derivatives.

21. A composition according to claim 20, wherein the grafted polar groups are maleic anhydride or acrylic acid.

22. A composition according to claim 20 or 21, wherein the adhesive polymer is a grafted styrene-ethylene-butylene-styrene copolymer with maleic anhydride.

23. A composition according to any of claims 20 to 22, wherein the grafted polar groups are in a proportion of less than 15% by weight with respect to the adhesive polymer.

24. A composition according to any of claims 20 to 23, wherein the grafted polar group is maleic anhydride and is in a proportion of less than 5% by weight of the adhesive polymer.

25. A composition according to claim 21, wherein the grafted polar group is acrylic acid and is in a proportion of less than 7% by weight of the adhesive polymer.

26. A composition according to any of claims 1 to 25, wherein the adhesive polymer is between 1% and 20% by weight of the mixture of polypropylene and adhesive polymer.

27. A composition according to any of claims 1 to 26, further comprising at least one additive selected from the group comprising dyes, fillers, antistatic agents, nucleating agents, clarifying agents, impact modifiers, deodorants, adsorbents, antioxidants and co-initiators.

28. A composition according to claim 27, wherein the additive is an antioxidant or deodorant.

29. A composition according to claim 28, wherein the antioxidant is selected from the group comprising 2,6-di (t-butyl)-4-methylphenol (BHT), 2,6-di (t-butyl)-p-cresol, thiodiethylenebis [3 - (3,5-di-t-butyl-4-hydroxyphenyl) propionate], triphenyl phosphite, tris-(nonylphenyl) phosphite, 2,2 '-methylene-bis (6-t-butyl-p-cresol), 2,2'-methylenebis (4,6-di-t-butylphenyl) octyl phosphite and vitamin E

30. A composition according to claim 28 or 29, wherein the proportion of antioxidant is less than 1% by weight of the total polymer composition.

31. A composition according to claim 28, wherein the deodorant is selected from the group comprising zinc oxide, zinc sulphate, silica, aluminium sulphate, zinc silicate, aluminium silicate, zinc and aluminium silicate, bentonite and zeolite.

32. A composition according to claim 28 or 31, wherein the proportion of deodorant is less than 2% by weight of the total polymer composition.

33. A composition according to claim 27 wherein the additive is a co-initiator.

34. A composition according to claim 33, wherein the co-initiator is selected from the group comprising N, N-dimethylaminoethyl methacrylate, N, N-dimethylaminoethyl acrylate, N, N-diethylaminoethyl methacrylate, 4 - (N, N-dimethylamino) phenethyl alcohol, tert-butylaminoethyl methacrylate, methyl diethanol amine, triethanolamine and N, N-dimethylaniline.

35. A composition according to any of claims 1 to 34, wherein the oxygen absorption rate is greater than 0.01 cc / g.day.

36. Use of the composition according to any of claims 1 to 35, for the manufacture of processed goods.

37. Use of the composition according to any of claims 1 to 35, for the manufacture of film, sheet, pipes or containers.

38. A multilayer structure including a layer made up by the composition according to any of claims 1 to 35.
